# EUROPEAN PATENT SPECIFICATION

(11) **EP 3 513 697 B1**
(45) Date of publication and mention of the grant of the patent: **01.05.2024**
(21) Application number: 18153082.5
(22) Date of filing: 23.01.2018
(51) Int. Cl.: A47J 36/32

(54) **COOKING APPLIANCE WITH A REMOTE CONTROL AND METHOD FOR CONTROLLING SUCH A COOKING APPLIANCE**
KOCHGERÄT MIT EINER FERNBEDIENUNG UND VERFAHREN ZUR STEUERUNG SOLCH EINES KOCHGERÄTS
APPAREIL DE CUISSON POURVU D'UNE COMMANDE À DISTANCE ET PROCÉDÉ POUR COMMANDER UN TEL APPAREIL DE CUISSON

(43) Date of publication of application: 24.07.2019
(73) Proprietor: ELECTROLUX APPLIANCES AKTIEBOLAG, 105 45 Stockholm (SE)
(72) Inventor: REUL, Kurt, 91541 Rothenburg ob der Tauber (DE); SCHULZ, Thomas, 91541 Rothenburg ob der Tauber (DE)
(74) Representative: Electrolux Group Patents

(56) References cited:
- EP-A1- 2 775 211
- WO-A1-2008/088124
- CN-U- 206 239 106
- DE-A1-102014 007 177
- DE-A1-102014 223 366
- DE-U1- 20 003 307
- KR-B1- 101 534 514
- US-A1- 2012 167 869
- US-A1- 2016 374 501

## Description

The present invention refers a cooking appliance according to the preamble of claim 1 and a method for controlling such a cooking appliance according to claim 5.

Known cooking appliances can comprise a remote control for controlling the cooking appliance remotely.

However, using a remote control and performing remote operation of a cooking appliance comprises a risk since unattended use of a cooking appliance could e.g. lead to an overheating situation and therefore to a fire. Unattended use of a cooking appliance therefore is forbidden in some countries.

The document US 2016/374501 A1 discloses a cooking apparatus incorporating wireless communication technology to carry out cooking procedures. Specifically, an app running on a smart phone is provided for monitoring the cooking appliance and the cooking thereon. In order to avoid an uncontrolled operation of the cooking appliance and an increased risk for e.g. a fire outbreak in case of the related user has left home, the app may warn the user or the cooking appliance may turn off after detection of the user and his smart phone have left home.

It is therefore an object of the present invention to improve the existing solutions and to provide a cooking appliance with a remote control and a respective method for controlling a cooking appliance wherein this risk is reduced.

The above object is solved by the present invention wherein a distance control is provided for detecting the distance between a user and the cooking appliance. The cooking appliance can be a hob, a baking oven or another appliance for heating food. The distance control is a wireless distance control, which includes a capacity sensor. The capacity sensor is comprised in the cooking appliance and is used to derive the user's distance to the cooking appliance based on a determined capacity that depends on said user's distance. The distance control is configured to limit or turn off the function of remote control, so as to avoid a critical situation of using the remote control without the user being close enough to the cooking appliance for an attended cooking.

Providing for a distance control for detecting the distance of the remote control and the cooking appliance leads to the benefit that it can be controlled whether a critical distance is exceeded. As a result a critical situation can be detected wherein the remote control is used for controlling the cooking appliance without a user being close enough to the cooking appliance so as to be able to attend and watch the cooking. In such a situation it might be overseen that the heated food or pan or pot is already too hot or will be further heated so that the danger of a fire might occur.

By detecting the distance between the user and the cooking appliance it is directly controllable whether the user is close enough to the cooking appliance so as to attend the cooking.

According to the inventive method of claim 5 a distance control is provided for detecting the distance between a user and the cooking appliance and the detected distance between the user and the cooking appliance is used to control the interaction between the remote control and the cooking appliance. A change of the distance between the user and the cooking appliance is derived from a change of the capacity of a capacity sensor arranged in the cooking appliance. Moreover, the function of the remote control or the controlling of the cooking appliance by means of the remote control can be limited or turned off. Hence, an increasing of the heating power of the cooking appliance is prevented in case a user is too far away from the cooking appliance so as to guarantee an attended cooking. In case the cooking appliance itself is detecting such a situation, the heating power can be reduced or switched off in order to reduce the risk of a fire.

Preferred embodiments are defined in the dependent claims.

The distance control is a wireless distance control.

Said capacitive sensor is used to detect the presence of the user and in addition the distance between the user and the cooking appliance so that it can be controlled whether the user is close enough to the cooking appliance so as to control and attend the cooking. Due to the fact that the capacitive sensor is comprised in the cooking appliance itself no further sensor or detector needs to be included in the remote control or worn by the user. In case the distance between the user and the cooking appliance is reduced or increased the respective capacitive sensor changes its capacity which can be used to derive the distance.

Additionally, the distance control can use radio frequency (RF) techniques such as Bluetooth, Wi-Fi, WLAN, ZigBee, Z-Wave, or RFID techniques.

RFID uses electromagnetic fields to automatically identify and track tags attended to objects. The tag contains electronically stored information. Passive tags collect energy from the nearby RFID reader's interrogating radio waves. Such a reader can be comprised in the cooking appliance. This leads to the benefit that only a passive tag needs to be included in the remote control in contrast to an active tag which itself would require a connection to a source of electrical power.

In case the distance control is based on Bluetooth, Wi-Fi, WLAN, ZigBee or Z-Wave techniques, the respective connection between the remote control and the cooking appliance which is used to control the heating appliance by means of the remote control is also used for measuring and controlling the distance between the remote control and the cooking appliance. Therefore no additional reader or transmitter is required for performing the distance control.

The attenuation of a RF signal is a function of the distance from the source. This can be used to calculate or determine the distance between the remote control and the cooking appliance. This results in the benefit that the connection between the remote control and the interface of the cooking appliance, that is used for the control of the cooking appliance by means of the remote control, in addition is used to determine the distance between the remote control and the cooking appliance. The RF signal that is used to transmit commands and instructions from the remote control to the cooking appliance is used to determine this distance by evaluating the attenuation of the RF signal. Assuming e.g. a point-source radiation of such a RF signal emitted from the cooking appliance or the remote control, the intensity of the RF signal received by the remote control or the cooking appliance is inversely proportional to the square of the distance from the source.

The dependency of the signal intensity and/ or of the connection between the remote control and the cooking appliance on the distance can thus be used to determine the distance between the cooking appliance and the remote control.

In a further preferred embodiment a smart device such as a smartphone or a tablet computer is used as remote control. It is known to use software applications ("Apps") running on a smartphone or tablet computer for controlling house hold appliances. According to the present invention such a smart device not only is used to control a cooking appliance so that no additional remote control is necessary. Since a distance control can be provided for detecting the distance between the smart device and the cooking appliance the discussed benefits regarding the security of the remote control is achieved too. Smart devices typically use Bluetooth, Wi-Fi or WLAN techniques for connecting to a household appliance. By monitoring the attenuation of the respective RF signal and/or the quality or single strength of the connection between the smart device and the cooking appliance, the distance between the smart device and the cooking appliance can be evaluated and respective measures can be taken in case this distance becomes too large.

According to a preferred embodiment of the inventive method remotely controlling the cooking appliance by means of the remote control is limited or inhibited in case the detected distance is beyond a limit. Unattended control of the cooking appliance can thus be avoided.

In addition or as an alternative the cooking appliance can be switched into a safe operation mode in case the detected distance is beyond the limit. This results in the benefit that as soon as a user or a remote control leaves the secure distance for attended cooking, respective measures can be taken so as to reduce the risk of a fire.

Such a safe operation mode may include a complete switch-off of all heating zones of the cooking appliance or of a mains power switch of the cooking appliance.

The respective limit for the distance between the cooking appliance and the remote control can be adjustable so that the respective function can be adapted to specific situations (such as specific installation situations).

Preferred distance limits are between 30 cm and 300 cm, more preferably between 50 and 100 cm, which assures that a user together with his remote control is in eye contact with the cooking appliance so as to assure attended cooking.

## Claims

1. A cooking appliance for heating food, the cooking appliance comprising a remote control for controlling the cooking appliance remotely;
**characterized in that**:
a distance control is provided for detecting the distance between a user and the cooking appliance, wherein the distance control is a wireless distance control including a capacitive sensor, which is comprised in the cooking appliance and which is used to derive the user's distance to the cooking appliance based on a determined capacity that depends on the user's distance, and wherein the distance control is configured to limit or turn off the function of remote control, so as to avoid a critical situation of using the remote control without the user being close enough to the cooking appliance for an attended cooking.

2. The cooking appliance according to claim 1, wherein the distance control uses radio frequency (RF) techniques, preferably Bluetooth, Wi-Fi, WLAN, ZigBee, Z-Wave, or RFID techniques.

3. The cooking appliance according to claim 2, wherein the detection of the distance is based on the attenuation of the RF signal as a function of the distance between the remote control and the cooking appliance.

4. The cooking appliance according to anyone of the preceding claims, wherein a smart device such as a smart phone or a tablet computer is used as remote control.

5. Method for controlling a cooking appliance for heating food, the cooking appliance comprising a remote control for controlling the cooking appliance remotely;
**characterized in that**:
a distance control is provided for detecting the distance between a user and the cooking appliance, wherein the detected distance between the user and the cooking appliance is used to control the interaction between the remote control and the cooking appliance, wherein a change of the distance between the user and the cooking appliance is derived from a change of the capacity of a capacity sensor arranged in the cooking appliance, and wherein the function of the controlling of the cooking appliance or the controlling of the cooking appliance by means of the remote control is limited or turned off upon detection by the distance control that the user is too far away from the cooking appliance so as to guarantee an attended cooking.

6. Method according to claim 5, wherein remotely controlling the cooking appliance by means of the remote control is limited or inhibited in case the detected distance is beyond a predetermined limit.

7. Method according to claim 5 or 6, wherein the cooking appliance is switched into a safe operation mode in case the detected distance is beyond a predetermined limit.

8. Method according to claim 7, wherein the switching into a safe operation mode includes the switch-off of all heating zones of the cooking appliance and / or of a mains power switch of the cooking appliance.

9. Method according to anyone of claims 6 to 8, wherein the limit is adjustable.

10. Method according to anyone of claims 6 to 9, wherein the limit is between 30cm and 300cm, preferably between 50cm and 100cm.

11. Method according to anyone of claims 5 to 10, wherein a smart device such as a smart phone or a tablet computer is used as remote control.

## Patentansprüche

1. Kochgerät zum Erhitzen von Lebensmitteln, wobei das Kochgerät eine Fernbedienung zur Fernsteuerung des Kochgeräts umfasst;
**dadurch gekennzeichnet, dass**:
eine Entfernungskontrolle zum Erfassen der Entfernung zwischen einem Benutzer und dem Kochgerät vorgesehen ist, wobei die Entfernungskontrolle eine drahtlose Entfernungskontrolle ist, die einen kapazitiven Sensor enthält, der in dem Kochgerät enthalten ist und der verwendet wird, die Entfernung des Benutzers zu dem Kochgerät basierend auf einer bestimmten Kapazität, die von der Entfernung des Benutzers abhängt, abzuleiten, und wobei die Entfernungskontrolle dazu ausgelegt ist, die Funktion der Fernbedienung zu begrenzen oder auszuschalten, um eine kritische Situation zu vermeiden, in der die Fernsteuerung verwendet wird, ohne dass der Benutzer nahe genug an dem Kochgerät für ein beaufsichtigtes Kochen ist.

2. Kochgerät nach Anspruch 1, wobei die Entfernungskontrolle Hochfrequenztechniken (HF), vorzugsweise Bluetooth, Wi-Fi, WLAN, ZigBee, Z-Wave oder RFID-Techniken, verwendet

3. Kochgerät nach Anspruch 2, wobei die Erfassung der Entfernung auf der Dämpfung des HF-Signals in Abhängigkeit von der Entfernung zwischen der Fernbedienung und dem Kochgerät basiert.

4. Kochgerät nach einem der vorhergehenden Ansprüche, wobei eine intelligente Vorrichtung wie ein Smartphone oder ein Tablet-Computer als Fernbedienung verwendet wird.

5. Verfahren zum Steuern eines Kochgeräts zum Erhitzen von Lebensmitteln, wobei das Kochgerät eine Fernbedienung zur Fernsteuerung des Kochgeräts umfasst;
**dadurch gekennzeichnet, dass**:
eine Entfernungskontrolle zum Erfassen der Entfernung zwischen einem Benutzer und dem Kochgerät vorgesehen ist, wobei die erfasste Entfernung zwischen dem Benutzer und dem Kochgerät zum Steuern der Interaktion zwischen der Fernbedienung und dem Kochgerät verwendet wird, wobei eine Änderung der Entfernung zwischen dem Benutzer und dem Kochgerät von einer Änderung der Kapazität eines im Kochgerät angeordneten Kapazitätssensors abgeleitet wird, und wobei die Funktion des Steuerns des Kochgeräts oder des Steuerns des Kochgeräts mittels der Fernbedienung eingeschränkt oder ausgeschaltet wird, wenn die Entfernungskontrolle erkennt, dass der Benutzer zu weit vom Kochgerät entfernt ist, um ein beaufsichtigtes Kochen zu gewährleisten.

6. Verfahren nach Anspruch 5, wobei die Fernsteuerung des Kochgeräts mittels der Fernbedienung begrenzt oder gesperrt wird, wenn die erfasste Entfernung einen vorgegebenen Grenzwert überschreitet.

7. Verfahren nach Anspruch 5 oder 6, wobei das Kochgerät in einen sicheren Betriebsmodus geschaltet wird, wenn die erfasste Entfernung einen vorgegebenen Grenzwert überschreitet.

8. Verfahren nach Anspruch 7, wobei das Umschalten in einen sicheren Betriebsmodus das Abschalten aller Heizzonen des Kochgeräts und/oder eines Netzschalters des Kochgeräts umfasst.

9. Verfahren nach einem der Ansprüche 6 bis 8, wobei der Grenzwert einstellbar ist.

10. Verfahren nach einem der Ansprüche 6 bis 9, wobei der Grenzwert zwischen 30 cm und 300 cm, vorzugsweise zwischen 50 cm und 100 cm liegt.

11. Verfahren nach einem der Ansprüche 5 bis 10, wobei eine intelligente Vorrichtung wie ein Smartphone oder ein Tablet-Computer als Fernbedienung verwendet wird.

## Revendications

1. Appareil de cuisson pour chauffer des aliments, l'appareil de cuisson comprenant une télécommande pour commander l'appareil de cuisson à distance ;
**caractérisé en ce que** :
une commande de distance est fournie pour détecter la distance entre un utilisateur et l'appareil de cuisson, la commande de distance étant une commande de distance sans fil comprenant un capteur capacitif, qui est inclus dans l'appareil de cuisson et qui est utilisé pour déduire la distance de l'utilisateur à l'appareil de cuisson sur la base d'une capacité déterminée qui dépend de la distance de l'utilisateur, et la commande de distance étant configurée pour limiter ou désactiver la fonction de commande à distance, afin d'éviter une situation critique d'utilisation de la télécommande sans que l'utilisateur soit suffisamment proche de l'appareil de cuisson pour une cuisson assistée.

2. Appareil de cuisson selon la revendication 1, la commande à distance utilisant des techniques de radiofréquence (RF), de préférence Bluetooth, Wi-Fi, WLAN, ZigBee, Z-Wave ou des techniques RFID.

3. Appareil de cuisson selon la revendication 2, la détection de la distance étant basée sur l'atténuation du signal RF en fonction de la distance entre la télécommande et l'appareil de cuisson.

4. Appareil de cuisson selon l'une quelconque des revendications précédentes, un dispositif intelligent tel qu'un téléphone intelligent ou une tablette informatique étant utilisé comme télécommande.

5. Procédé de commande d'un appareil de cuisson pour chauffer des aliments, l'appareil de cuisson comprenant une télécommande pour commander l'appareil de cuisson à distance ;
**caractérisé en ce que** :
une commande de distance est fournie pour détecter la distance entre un utilisateur et l'appareil de cuisson, la distance détectée entre l'utilisateur et l'appareil de cuisson étant utilisée pour commander l'interaction entre la télécommande et l'appareil de cuisson, une modification de la distance entre l'utilisateur et l'appareil de cuisson étant déduite d'une modification de la capacité d'un capteur de capacité agencé dans l'appareil de cuisson, et la fonction de commande de l'appareil de cuisson ou la commande de l'appareil de cuisson au moyen de la télécommande étant limitée ou désactivée lors de la détention par la commande de la distance que l'utilisateur est trop éloigné de l'appareil de cuisson pour garantir une cuisson assistée.

6. Procédé selon la revendication 5, la commande à distance de l'appareil de cuisson au moyen de la télécommande étant limitée ou inhibée au cas où la distance détectée est supérieure à une limite prédéterminée.

7. Procédé selon la revendication 5 ou 6, l'appareil de cuisson étant commuté dans un mode de fonctionnement sûr au cas où la distance détectée est au-delà d'une limite prédéterminée.

8. Procédé selon la revendication 7, le passage à un mode de fonctionnement sûr comprenant l'arrêt de toutes les zones de chauffage de l'appareil de cuisson et / ou d'un interrupteur d'alimentation secteur de l'appareil de cuisson.

9. Procédé selon l'une quelconque des revendications 6 à 8, la limite étant réglable.

10. Procédé selon l'une quelconque des revendications 6 à 9, la limite étant comprise entre 30 cm et 300 cm, de préférence entre 50 cm et 100 cm.

11. Procédé selon l'une quelconque des revendications 5 à 10, un dispositif intelligent tel qu'un téléphone intelligent ou une tablette informatique étant utilisé comme télécommande.
